# EUROPÄISCHE PATENTSCHRIFT

(11) **EP 1 683 674 B1**
(45) Veröffentlichungstag und Bekanntmachung des Hinweises auf die Patenterteilung: **18.06.2008**
(21) Anmeldenummer: 06100634.2
(22) Anmeldetag: 20.01.2006
(51) Int. Cl.: B60K 17/28, B60K 25/00

(54) **Anordnung zur Auswahl der Übersetzungsstufe eines Zapfwellengetriebes**
Arrangement for selecting the reduction ratio of a PTO transmission
Dispositif de sélection de rapport de transmission d'une boîte de vitesses de prise de force

(30) Priorität: 25.01.2005 DE 102005003325
(43) Veröffentlichungstag der Anmeldung: 26.07.2006
(73) Patentinhaber: Deere & Company, Moline, IL 61265-8098 (US)
(72) Erfinder: Tarasinski, Dr., Nicolai, Frankenthal 67227 (DE); Reinards, Marco, Bleialf 54608 (DE)
(74) Vertreter: Holst, Sönke

(56) Entgegenhaltungen:
- US-A- 6 134 494
- US-B1- 6 386 303
- US-B1- 6 401 848

## Beschreibung

### Stand der Technik

Die Erfindung betrifft eine Anordnung zur Auswahl der Übersetzungsstufe eines Zapfwellengetriebes zum Antrieb eines Zapfwellenausgangs eines landwirtschaftlichen Fahrzeugs, mit einer Steuereinrichtung, die mit einem zur Auswahl der Übersetzungsstufe des Zapfwellengetriebes eingerichteten, fremdkraftbetätigten Aktor und mit einer ersten durch einen Bediener betätigbaren Eingabeeinrichtung zur Eingabe der Übersetzungsstufe des Zapfwellengetriebes verbunden ist, die sich an einem Bedienerarbeitsplatz des Traktors befindet.

Im Stand der Technik sind landwirtschaftliche Traktoren mit einem Verbrennungsmotor ausgestattet, der im Betrieb die Räder zum Vortrieb des Traktors und eine Zapfwelle antreibt, die zum Antrieb von Zusatzgeräten dient, wie Bodenbearbeitungsgeräten oder Ballenpressen. Zwischen den Motor und den Zapfwellenausgang des Traktors ist ein Zapfwellengetriebe geschaltet. Derartige Zapfwellengetriebe weisen in der Regel mehrere, durch einen Bediener auswählbare Übersetzungsstufen auf, die bei bestimmten Motordrehzahlen zu gewünschten Drehzahlen der Zapfwelle führen. Die Zapfwellengetriebe können auch in eine Neutralstellung gebracht werden, in der sich die Zapfwelle frei drehen lässt.

Die Zapfwellengetriebe werden bei bekannten Ausführungsformen (s. US 6 401 848 B, beinhaltet die Merkmale des Oberbegriffs des Anspruchs 1) mechanisch geschaltet. Ein Schalthebel befindet sich am Bedienerarbeitsplatz des Traktors und ist durch Übertragungselemente, in der Regel Gestänge oder Seil- oder Bowdenzüge, mit dem Zapfwellengetriebe verbunden. Bei anderen Zapfwellengetrieben befindet sich der Schalthebel direkt am Zapfwellengetriebegehäuse, so dass der Bediener vor einem Schaltvorgang den Arbeitsplatz verlassen und sich an die Rückseite des Traktors begeben muss, an der sich das Zapfwellengetriebe befindet.

Bei einer anderen Ausführungsform ist am Bedienerarbeitsplatz eine Eingabeeinrichtung mit mehreren Tasten angeordnet, die jeweils zur Auswahl einer Übersetzungsstufe oder der Neutralstellung des elektrohydraulisch gesteuerten Zapfwellengetriebes dienen.

Im Stand der Technik ist demnach nur eine einzige Eingabeeinrichtung vorhanden, mit der ein Bediener die Übersetzungsstufe des Zapfwellengetriebes auswählen kann.

Die US 6 134 494 A, US 6 205 385 B und US 6 386 303 B beschreiben Traktoren, bei denen der Antrieb der Zapfwelle durch einen in der Kabine befindlichen Schalter ein- und ausgeschaltet werden kann. Ein weiterer Schalter für den Antrieb der Zapfwelle befindet sich an der Rückseite des Traktors oberhalb der Kotschützer. In der DE 102 49 757 A wird ein Außentaster vorgeschlagen, der eine externe Bedienung von Steuergeräten des Traktors ermöglicht, beispielsweise für die Bedienung der Zapfwellen.

### Aufgabe der Erfindung

Die der Erfindung zu Grunde liegende Aufgabe wird darin gesehen, eine Schaltanordnung zur Auswahl der Übersetzungsstufe eines Zapfwellengetriebes bereitzustellen, die einem Bediener eine Auswahl der Übersetzungsstufe bzw. der Neutralstellung des Zapfwellengetriebes ermöglicht, ohne dass er seinen jeweiligen Standort verlassen muss.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Zapfwellengetriebe ist zur Auswahl der jeweiligen Übersetzungsstufe bzw. Neutralstellung mit einem fremdkraftbetätigten Aktor versehen, der durch eine Steuereinrichtung kontrolliert wird. Am Bedienerarbeitsplatz ist eine erste Eingabeeinrichtung angeordnet, die mit der Steuereinrichtung verbunden ist und zur Eingabe der gewünschten Übersetzungsstufe des Zapfwellengetriebes dient. Es wird vorgeschlagen, die Steuereinrichtung mit einer zweiten Eingabeeinrichtung zu verbinden, die sich an einer geeigneten Stelle des Fahrzeugs vom Bedienerarbeitsplatz entfernt befindet und dem Bediener zumindest eine Auswahl der Neutralstellung, vorzugsweise aber auch einer Übersetzungsstufe des Zapfwellengetriebes ermöglicht.

Auf diese Weise ist die Auswahl der Übersetzungsstufe oder Neutralstellung des Zapfwellengetriebes für den Bediener wesentlich vereinfacht, da er die Auswahl sowohl am Bedienerarbeitsplatz als auch außen am Fahrzeug durchführen kann.

Eine geeignete Stelle zur Anbringung der zweiten Eingabeeinrichtung ist an der Rückseite des Fahrzeugs, beispielsweise im Griffbereich eines neben dem Zapfwellenausgang des Zapfwellengetriebes stehenden Bedieners, insbesondere an einem hinteren Kotschützer des Fahrzeugs, da der Bediener dort steht, wenn er Arbeitsgeräte an- und abkoppelt. Falls vorn am Fahrzeug eine Schnittstelle für eine Zapfwelle ist, kann auch dort eine zweite Eingabeeinrichtung vorgesehen sein. Die Eingabeeinrichtung kann auch mobil (kabelgebunden oder drahtlos mit der Steuereinrichtung gekoppelt) sein, um sie am jeweils benötigten Ort einsetzen zu können.

Die externe Auswahl der Übersetzungsstufe ist besonders dann von Vorteil, wenn ein Arbeitsgerät mit einer Zapfwelle an das Fahrzeug angekoppelt werden soll. Hierzu ist es je nach Situation sinnvoll, den Zapfwellenstummel fahrzeugseitig drehen zu können, um die zum Arbeitsgerät führende Gelenkwelle (Hohlwelle) auf die Verzahnung des Zapfwellenstummels aufstecken zu können. Bei laufendem Verbrennungsmotor wird der Zapfwellenstummel in der Regel jedoch durch eine im Zapfwellengetriebe befindliche hydraulische Bremse festgehalten. Um den Zapfwellenstummel dennoch drehen zu können, erlaubt die Erfindung, durch Betätigen der zweiten Eingabeeinrichtung an Ort und Stelle das Zapfwellengetriebe in die Neutralstellung zu verbringen, in der sich der Zapfwellenstummel frei drehen lässt. In einer möglichen Ausführungsform der Erfindung reicht es demnach aus, wenn die zweite Eingabeeinrichtung ermöglicht, das Zapfwellengetriebe in die Neutralstellung zu verbringen.

Bei einer anderen denkbaren Ausführungsform ist die Steuereinrichtung mit einer externen Hubwerksbetätigungseinrichtung des Fahrzeugs gekoppelt, die zum Anheben und Absenken des Hubwerks dient und bei vielen landwirtschaftlichen Traktoren in der Nähe des Hubwerks an der Rückseite des Traktors bereits vorhanden ist, in der Regel in den rückwärtigen Kotflügel integriert oder darüber angeordnet. Die Steuereinrichtung erhält außerdem eine Information über den Betriebszustand des Zapfwellenausgangs, d. h. ihr werden Daten zugeführt, ob die Kupplung der Zapfwelle eingeschaltet ist oder nicht. Ist die Zapfwelle eingeschaltet, werden die Eingaben der Hubwerkbetätigungseinrichtung in an sich bekannter Weise zur Ansteuerung des Hubwerks verwendet. Ist die Zapfwelle hingegen ausgeschaltet, wird das Zapfwellengetriebe bei einer Betätigung einer der Tasten der Hubwerkbetätigungseinrichtung durch die Steuereinrichtung in die Neutralstellung verbracht. Auf diese Weise nutzt man die Hubwerksbetätigungseinrichtung auch als zweite Eingabeeinrichtung, mit der das Zapfwellengetriebe in die Neutralstellung verbracht werden kann. Im Rahmen des erfindungsgemäßen Gedankens könnten auch beliebige andere Bedienelemente, die sich an der Außenseite des Fahrzeugs in der Nähe der Zapfwelle befinden, mit einer zweiten Funktion versehen werden, die ein Verbringen des Zapfwellengetriebes in die Neutralstellung ermöglicht, solange sich das Fahrzeug in einem Betriebszustand befindet, bei dem das Bedienelement nicht für seine erste Funktion benötigt wird.

Da die Erfindung eine zweite Eingabeeinrichtung für das Zapfwellengetriebe umfasst, sind Situationen mit widersprüchlichen Eingaben denkbar, wenn beispielsweise ein Bediener am Bedienerarbeitsplatz an der ersten Eingabeeinrichtung eine bestimmte Übersetzungsstufe auswählt und eine andere Person mit der zweiten Eingabeeinrichtung die Neutralstellung wählt. Um unzweckmäßige Zustände des Aktors oder gar dessen Beschädigung zu vermeiden, prüft die Steuereinrichtung vorzugsweise den Status beider Eingabeeinrichtungen und ignoriert widersprüchliche Eingaben.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Fahrzeugs in Form eines Traktors mit einem daran gehängten Arbeitsgerät in Form einer Rundballenpresse,
- Fig. 2: eine schematische Darstellung des Antriebsstrangs der Zapfwelle und der Schaltanordnung zur Auswahl der Übersetzungsstufe eines Zapfwellengetriebes.

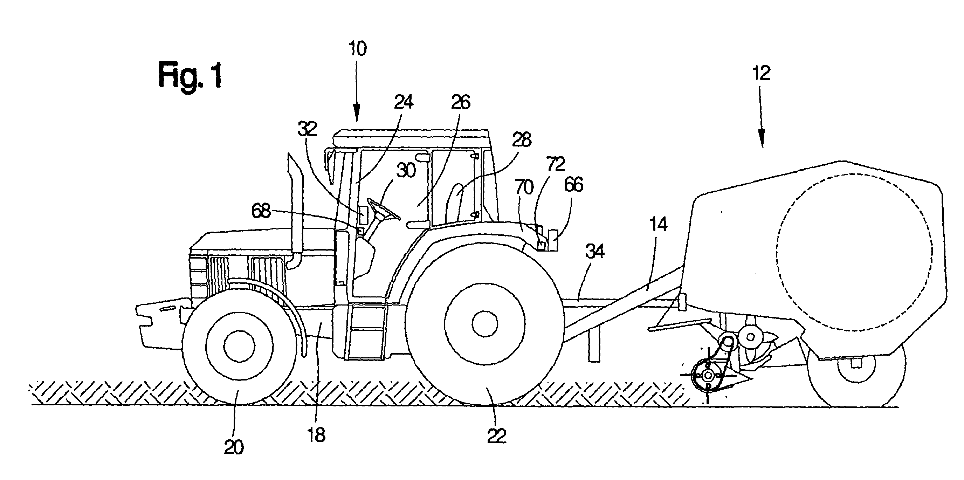

Die Figur 1 zeigt eine seitliche Ansicht eines landwirtschaftlichen Fahrzeugs 10 in Form eines Traktors und eines mittels einer Deichsel 14 an eine Kupplung (nicht gezeigt) des Fahrzeugs 10 gekoppelten Arbeitsgeräts 12 in Form einer Rundballenpresse. Das Fahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet. Der Bedienerarbeitsplatz 26 umfasst einen Sitz 28, ein Lenkrad 30, Pedale (nicht gezeigt) und einige im Griffbereich des sich am Bedienerarbeitsplatz 26 befindlichen Bedieners angeordnete Eingabeelemente zur Vorgabe auswählbarer Funktionen des Fahrzeugs 10. Zu letzteren zählt eine erste Eingabeeinrichtung 32.

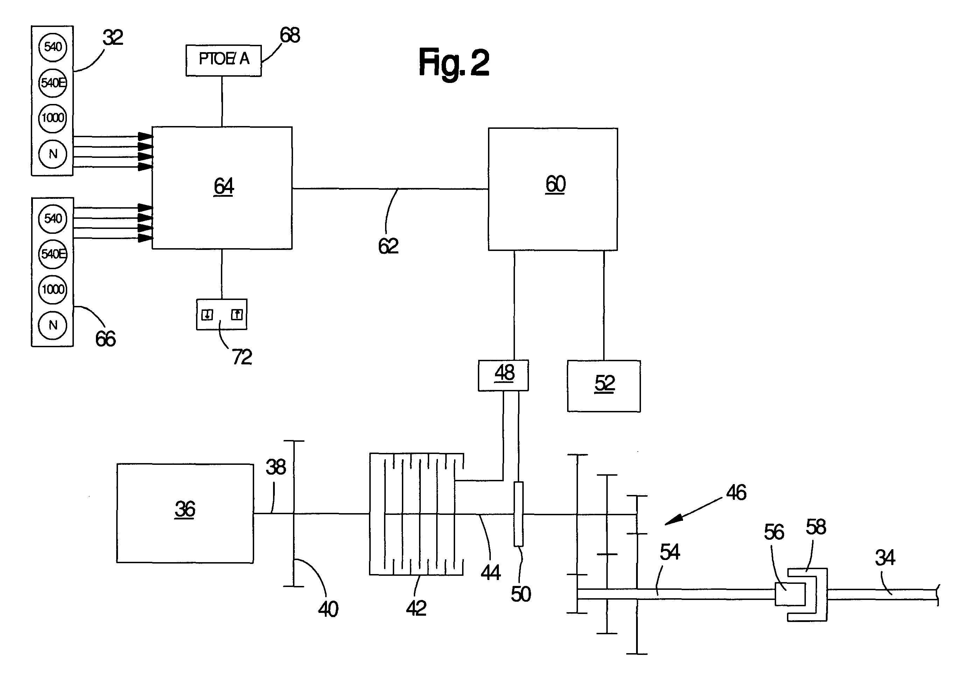

Die Figur 2 zeigt schematisch den Antriebsstrang des Fahrzeugs 10 zum Antrieb einer Zapfwelle 34, die zum Antrieb antreibbarer Elemente des Arbeitsgeräts 12 dient. Ein Verbrennungsmotor 36, in der Regel ein Dieselmotor, treibt eine Welle 38 an, die über ein Zahnrad 40 in nicht näher dargestellter, da an sich bekannter Weise zum Antrieb der Hinterräder 22 und vorzugsweise auch der Vorderräder 20 und ggf. anderer antreibbarer Einrichtungen des Fahrzeugs 10, wie eines Kompressors einer Klimaanlage dient.

Die Welle 40 ist auch mit einer hydraulisch betätigbaren Kupplung 42 verbunden, die ausgangsseitig mit einer Eingangswelle 44 eines Zapfwellengetriebes 46 verbunden ist. Die Kupplung 42 wird mittels eines Ventilzusammenbaus 48 betätigt, der auch mit einer auf der Eingangswelle 44 angeordneten Bremse 50 verbunden ist.

Das Zapfwellengetriebe 46 weist drei unterschiedliche, auswählbare Übersetzungsstufen auf und umfasst daher drei kämmende Zahnradpaare. Die Übersetzungsstufe wird mittels eines elektrohydraulisch (oder elektrisch) fremdkraftbetätigten Aktors 52 ausgewählt, der beispielsweise mittels verschiebbarer Kopplungsglieder (s. EP 0 819 562 A) festlegt, welches der drei auf einer Abtriebswelle 54 des Zapfwellengetriebes 46 angeordneten Zahnräder in drehmomentschlüssiger Verbindung mit der Abtriebswelle 54 steht. Alternativ könnte der Aktor 52 festlegen, welches der drei auf der Eingangswelle 44 angeordneten Zahnräder in drehmomentschlüssiger Verbindung mit der Eingangswelle 44 steht. Der Aktor 52 ermöglicht die Auswahl von drei Übersetzungsstufen, von denen in der vorliegenden Ausführungsform eine erste bei der Nenndrehzahl des Verbrennungsmotors 36 von 2100/min eine Drehzahl der Abtriebswelle 54 von 1000/min ermöglicht, eine zweite bei einer abgesenkten Drehzahl des Verbrennungsmotors 36 von 1800/min eine Drehzahl der Abtriebswelle 54 von 540/min ermöglicht, und eine dritte bei der Nenndrehzahl des Verbrennungsmotors 36 von 2100/min eine Drehzahl der Abtriebswelle 54 von 540/min ermöglicht. Außerdem besteht die Möglichkeit, keines der Zahnräder des Zapfwellengetriebes 46 mit der Eingangswelle 44 bzw. Abtriebswelle 54 zu koppeln, um das Zapfwellengetriebe 46 in eine Neutralstellung zu bringen, in der die Abtriebswelle 54 auch bei aktiver Bremse 50 frei drehbar ist.

Die Abtriebswelle 54 ist mit einem Zapfwellenausgang 56 in Form eines Zapfwellenstummels verbunden, auf den die mit einem Hohlwellenendstück 58 ausgestattete Zapfwelle 34 des Arbeitsgeräts 12 aufschiebbar ist. Die Zapfwelle 34 ist in der Regel als Gelenkwelle ausgeführt.

Eine elektronische Steuereinrichtung 60 ist mit dem Ventilzusammenbau 48 und mit dem Aktor 52 verbunden. Über einen Gerätebus 62 (z. B. CAN-Bus) ist sie außerdem mit einer Bedienerschnittstellenlogik 64 verbunden, die ihrerseits mit der ersten Eingabeeinrichtung 32 verbunden ist. Die erste Eingabeeinrichtung 32 umfasst vier Drucktasten, von denen jeweils eine einer anderen der erwähnten Übersetzungsstufen und der Neutralstellung des Zapfwellengetriebes 46 zugeordnet ist. Außerdem ist die Bedienerschnittstellenlogik 64 mit einem Zapfwellenschalter 68, der sich im Griffbereich eines Bedieners am Bedienerarbeitsplatz 26 befindet, und einer zweiten Eingabeeinrichtung 66 verbunden.

Die erste Eingabeeinrichtung 32 ermöglicht dem Bediener durch manuelles Betätigen der vier Drucktasten je eine der drei Übersetzungsstufen des Zapfwellengetriebes 46 oder die Neutralstellung auszuwählen. Die Bedienerschnittstellenlogik 64 übermittelt eine Information über die Vorgabe des Bedieners über den Bus 62 an die Steuereinrichtung 60, die ihrerseits den Aktor 52 entsprechend der erhaltenen Information ansteuert. Die jeweils ausgewählte Übersetzungsstufe kann dem Bediener durch eine Beleuchtung der zugeordneten Drucktaste der Eingabeeinrichtung 32 angezeigt werden.

Verbringt der Bediener den Zapfwellenschalter 68 in die Betriebsposition, übermittelt die Bedienerschnittstellenlogik 64 eine entsprechende Information über den Bus 62 an die Steuereinrichtung 60, die ihrerseits den Ventilzusammenbau 48 veranlasst, die Bremse 50 zu lösen und die Kupplung 42 zu schließen. Verbringt der Bediener den Zapfwellenschalter 68 in die Außerbetriebsposition, übermittelt die Bedienerschnittstellenlogik 64 analog eine entsprechende Information über den Bus 62 an die Steuereinrichtung 60, die ihrerseits den Ventilzusammenbau 48 veranlasst, die Kupplung 42 zu öffnen und die Bremse 50 zu aktivieren.

Die zweite Eingabeeinrichtung 66 befindet sich an der Rückseite der rückwärtigen Kotschützer 70 des Fahrzeugs 10 und ist ebenfalls (durch separate Kabel, wie dargestellt, oder über den Bus 62) mit der Bedienerschnittstellenlogik 64 verbunden. Sie umfasst in der dargestellten Ausführungsform ebenfalls vier Drucktasten, die in Aufbau und Funktion den Drucktasten der ersten Eingabeeinrichtung 32 entsprechen. Die Bedienerschnittstellenlogik 64 überprüft die von den Eingabeeinrichtungen 32 und 66 eingehenden Signale auf Fehler hin, insbesondere widersprüchliche Eingaben, und leitet nur als gültig eingestufte Schaltsignale an die Steuereinrichtung 60 weiter. Die zweite Eingabeeinrichtung 66 unterscheidet sich in Form und Kennzeichnung hinreichend deutlich von eventuellen sonstigen, an der Rückseite des Fahrzeugs 10 angeordneten Bedienelementen. Bevorzugt wird hier auch eine räumlich getrennte Anordnung.

Beim Ankoppeln des Arbeitsgeräts 12 an das Fahrzeug 10 steht der Bediener an der Rückseite des Fahrzeugs 10. Falls der Zapfwellenausgang 56 und das Hohlwellenendstück 58 der Zapfwelle 34 nicht in einer ausgerichteten Position stehen, die ein Aufschieben des Hohlwellenendstücks 58 auf den Zapfwellenausgang 56 ermöglicht, kann der Bediener mittels der zweiten Eingabeeinrichtung 66 veranlassen, dass das Zapfwellengetriebe 46 in die Neutralstellung gebracht wird. Dann lässt sich der Zapfwellenausgang 54 trotz der aktivierten Bremse 50 problemlos drehen, um ihn in eine Position zu verbringen, in der sich das Hohlwellenendstück 58 auf den Zapfwellenausgang 56 aufschieben lässt.

Bei einer anderen Ausführungsform würde es auch ausreichen, wenn die zweite Eingabeeinrichtung 66 nur eine Eingabemöglichkeit für die Neutralstellung aufweist, d. h. nur eine dieser Möglichkeit zugeordnete Taste aufweist.

An der Rückseite des Fahrzeugs 10 befindet sich weiterhin eine Hubwerksbetätigungseinrichtung 70, die - wie die zweite Eingabeeinrichtung 66 - am Kotschützer 70 angebracht und mit der Bedienerschnittstellenlogik 64 verbunden ist. Die Steuereinrichtung 60 veranlasst ein (nicht eingezeichnetes) Hubwerk, sich abhängig von eventuellen Eingaben eines Bedieners an der Hubwerksbetätigungseinrichtung 70 anzuheben oder abzusenken, solange der Zapfwellenschalter 68 eingeschaltet ist. Ist der Zapfwellenschalter 68 hingegen ausgeschaltet, veranlasst die Steuereinrichtung 60 bei einer Betätigung einer der beiden Tasten der Hubwerksbetätigungseinrichtung 72 durch einen Bediener, dass der Aktor 52 das Zapfwellengetriebe 46 in die Neutralstellung verbringt. Somit kann der Bediener, an der Rückseite des Fahrzeugs 10 stehend, durch Betätigung der Hubwerksbetätigungseinrichtung 72 das Zapfwellengetriebe 46 in die Neutralstellung schalten. Bei der zuletzt beschriebenen Ausführungsform könnte die zweite Eingabeeinrichtung 66 auch entfallen, da ihre Funktion durch die Hubwerksbetätigungseinrichtung 72 übernommen wird.

## Patentansprüche

1. Anordnung zur Auswahl der Übersetzungsstufe eines Zapfwellengetriebes (46) zum Antrieb eines Zapfwellenausgangs (56) eines landwirtschaftlichen Fahrzeugs (10), mit einer Steuereinrichtung (60), die mit einem zur Auswahl der Übersetzungsstufe des Zapfwellengetriebes (46) eingerichteten, fremdkraftbetätigten Aktor (52) und mit einer ersten durch einen Bediener betätigbaren Eingabeeinrichtung (32) zur Eingabe der Übersetzungsstufe des Zapfwellengetriebes (46) verbunden ist, die an einem Bedienerarbeitsplatz (26) des Fahrzeugs (10) anbringbar ist, **dadurch gekennzeichnet, dass** die Steuereinrichtung (60) mit einer zweiten durch einen Bediener betätigbaren Eingabeeinrichtung (66) verbunden ist, die im Abstand vom Bedienerarbeitsplatz (26) anbringbar ist und zumindest eine Eingabe zur Auswahl einer Neutralstellung des Zapfwellengetriebes (46) ermöglicht.

2. Anordnung nach Anspruch 1, **dadurch gekennzeichnet, dass** die zweite Eingabeeinrichtung (66) im Griffbereich eines neben dem Zapfwellenausgang (56) des Zapfwellengetriebes (46) stehenden Bedieners anbringbar ist, insbesondere in der Nähe eines oder an einem hinteren Kotschützer(s) (70) des Fahrzeugs (10).

3. Anordnung nach Anspruch 1 oder 2, **dadurch gekennzeichnet, dass** die zweite Eingabeeinrichtung (66) eine Auswahl unterschiedlicher Übersetzungsstufen des Zapfwellengetriebes (46) ermöglicht.

4. Anordnung nach Anspruch 1 oder 2, **dadurch gekennzeichnet, dass** die zweite Eingabeeinrichtung nur eine Auswahl der Neutralstellung des Zapfwellengetriebes (46) ermöglicht.

5. Anordnung nach Anspruch 4, **dadurch gekennzeichnet, dass** die Steuereinrichtung (60) mit einem Bedienelement verbunden ist, das an der Außenseite des Fahrzeugs. (10) in der Nähe des Zapfwellenausgangs (56) anbringbar ist, und dass das Bedienelement mit einer zweiten Funktion versehen ist, die ein Verbringen des Zapfwellengetriebes (54) in die Neutralstellung bewirkt, solange sich das Fahrzeug (10) in einem Betriebszustand befindet, bei dem das Bedienelement nicht für seine erste Funktion benötigt wird.

6. Anordnung nach Anspruch 5, **dadurch gekennzeichnet, dass** die Steuereinrichtung (60) mit einer Hubwerksbetätigungseinrichtung (72) verbunden und betreibbar ist, bei ausgeschaltetem Zapfwellenausgang (56) und einer Betätigung der Hubwerksbetätigungseinrichtung (72) die Neutralstellung des Zapfwellengetriebes (46) anzusteuern, so dass die Hubwerksbetätigungseinrichtung (72) als zweite Eingabeeinrichtung verwendbar ist.

7. Anordnung nach einem der Ansprüche 1 bis 6, **dadurch gekennzeichnet, dass** die Steuereinrichtung (60) eingerichtet ist, sich widersprechende, gleichzeitige Eingaben von der ersten Eingabeeinrichtung (32) und der zweiten Eingabeeinrichtung (66) zu ignorieren.

8. Landwirtschaftliches Fahrzeug (10), insbesondere Traktor, mit einer Anordnung nach einem der Ansprüche 1 bis 7.

## Claims

1. Arrangement for selecting the step-up stage of a power take-off shaft transmission (46) for driving a power take-off shaft output (56) of an agricultural vehicle (10), with a control device (60) which is connected to an actuator (52) which is operated on power from an external source and set up for selecting the step-up stage of the power take-up shaft transmission (46) and to a first input device (32), actuable by an operator, for the input of the step-up stage of the power take-off shaft transmission (46), which input device (32) can be mounted at an operator's workstation (26) of the vehicle (10), **characterized in that** the control device (60) is connected to a second input device (66), which can be actuated by an operator and which can be mounted at a distance from the operator's workstation (26), and allows at least one input for selecting a neutral position of the power take-off shaft transmission (46).

2. Arrangement according to Claim 1, **characterized in that** the second input device (66) can be mounted in the grip region of an operator standing next to the power take-off shaft output (56) of the power take-off shaft transmission (46), in particular in the vicinity of or at a rear mudguard (70) of the vehicle (10).

3. Arrangement according to Claim 1 or 2, **characterized in that** the second input device (66) allows a selection of different step-up stages of the power take-off shaft transmission (46).

4. Arrangement according to Claim 1 or 2, **characterized in that** the second input device allows only a selection of the neutral position of the power take-off shaft transmission (46).

5. Arrangement according to Claim 4, **characterized in that** the control device (60) is connected to an operating element which can be mounted on the outside of the vehicle (10) in the vicinity of the power take-off shaft output (56), and **in that** the operating element is provided with a second function which causes the power take-off shaft transmission (54) to be brought into the neutral position as long as the vehicle (10) is in an operating state in which the operating element is not required for its first function.

6. Arrangement according to Claim 5, **characterized in that** the control device (60) is connected to a lifting-mechanism actuation device (72) and can be operated, with the power take-off shaft output (56) switched off and with an actuation of the lifting-mechanism actuation device (72), so as to activate the neutral position of the power take-off shaft transmission (46), so that the lifting-mechanism actuation device (72) can be used as a second input device.

7. Arrangement according to one of Claims 1 to 6, **characterized in that** the control device (60) is set up to ignore contradictory simultaneous inputs by the first input device (32) and the second input device (66).

8. Agricultural vehicle (10), in particular a tractor, having an arrangement according to one of Claims 1 to 7.

## Revendications

1. Dispositif de sélection du rapport de vitesse d'une transmission à prise de force (46), destinée à entraîner une sortie d'arbre de prise de force (56) d'un véhicule agricole (10), comportant un dispositif de commande (60), qui est relié à un actionneur (52), actionné par une force extérieure et conçu pour sélectionner le rapport de vitesse de la transmission à prise de force (46), et à un premier dispositif d'entrée (32), qui peut être actionné par un utilisateur pour entrer le rapport de vitesse de la transmission à prise de force (46) et qui peut être monté sur un poste de conduite (26) du véhicule (10), **caractérisé en ce que** le dispositif de commande (60) est relié à un deuxième dispositif d'entrée (66), qui peut être actionné par un utilisateur et qui peut être monté à distance du poste de conduite (26) et permet au moins une entrée pour sélectionner une position neutre de la transmission à prise de force (46).

2. Dispositif selon la revendication 1, **caractérisé en ce que** le deuxième dispositif d'entrée (66) peut être monté dans la zone de préhension d'un utilisateur debout à côté de la sortie d'arbre de prise de force (56) de la transmission à prise de force (46), en particulier à proximité d'un ou sur un pare-boue arrière (70) du véhicule (10).

3. Dispositif selon la revendication 1 ou 2, **caractérisé en ce que** le deuxième dispositif d'entrée (66) permet de sélectionner différents rapports de vitesse de la transmission à prise de force (46).

4. Dispositif selon la revendication 1 ou 2, **caractérisé en ce que** le deuxième dispositif d'entrée permet de sélectionner uniquement la position neutre de la transmission à prise de force (46).

5. Dispositif selon la revendication 4, **caractérisé en ce que** le dispositif de commande (60) est relié à un élément de commande, qui peut être monté sur le côté extérieur du véhicule (10) à proximité de la sortie d'arbre de prise de force (56), et **en ce que** l'élément de commande est muni d'une deuxième fonction, par laquelle la transmission à prise de force (54) peut être amenée dans la position neutre, tant que le véhicule (10) est dans une position de service dans laquelle l'élément de commande n'est pas nécessaire pour sa première fonction.

6. Dispositif selon la revendication 5, **caractérisé en ce que** le dispositif de commande (60) est relié à un dispositif d'actionnement d'un mécanisme de levage (72) et, lorsque la sortie d'arbre de prise de force (56) est désactivée et lors de l'actionnement du dispositif d'actionnement d'un mécanisme de levage (72), peut être utilisé pour commander la transmission à prise de force (46) en position neutre, de telle sorte que le dispositif d'actionnement d'un mécanisme de levage (72) peut être utilisé comme deuxième dispositif d'entrée.

7. Dispositif selon l'une quelconque des revendications 1 à 6, **caractérisé en ce que** le dispositif de commande (60) est conçu pour ignorer des entrées simultanées et contradictoires du premier dispositif d'entrée (32) et du deuxième dispositif d'entrée (66).

8. Véhicule agricole (10), en particulier tracteur, comportant un dispositif selon l'une quelconque des revendications 1 à 7.
